# EUROPEAN PATENT SPECIFICATION

(11) **EP 3 061 803 B1**
(45) Date of publication and mention of the grant of the patent: **27.12.2017**
(21) Application number: 14786222.1
(22) Date of filing: 09.10.2014
(51) Int. Cl.: C10J 3/84, C10J 3/76, C10K 3/00, C10K 3/02

(54) **PROCESS AND REACTOR FOR CONDITIONING A GAS STREAM FROM A GASIFIER, THERMAL CRACKING OF TARS AND STEAM REFORMING**
VERFAHREN UND REAKTOR ZUR BEHANDLUNG EINER GASSTROM AUS EINEM VERGASER, THERMISCHES CRACKEN VON TEEREN UND DAMPFREFORMIERUNG
PROCÉDÉ ET RÉACTEUR DE CONDITIONNEMENT D'UN FLUX DE GAZ D' UN GAZÉIFICATEUR, CRAQUAGE THERMIQUE DE GOUDRONS ET LE VAPOREFORMAGE

(30) Priority: 21.10.2013 ES 201331548
(43) Date of publication of application: 31.08.2016
(73) Proprietor: Eqtec Iberia, S.L., 08150 Parets del Valles (Barcelona) (ES)
(72) Inventor: ALEMÁN MÉNDEZ, Yoel, E-08150 Barcelona (ES)
(74) Representative: Isern-Jara, Nuria
(86) International application number: PCT/ES2014/070767
(87) International publication number: WO 2015/059328

(56) References cited:
- WO-A1-2012/162842
- WO-A2-2007/048058
- WO-A2-2012/148172
- US-A- 4 326 856

## Description

### OBJECT OF THE INVENTION

The present invention belongs to the field of treatment of a gas stream from gasification of organic solid materials and, to a reactor for conditioning a gas stream from a gasifier, which comprises a distributor for conditioning the gas stream from a gasification process and in particular a device located inside said distributor for promoting the thermal cracking of the tars present in the outlet gas stream from a gasifier and the steam reforming of the remaining or unburned carbon (char).

The invention also relates to the process for conditioning an outlet gas stream from a gasifier, conducting reactions for thermal cracking of tars and the steam reforming of the remaining carbon for subsequent energy valuation of said gas using the reactor mentioned previously.

### BACKGROUND OF THE INVENTION

Gasification is a thermochemical process in which a carbonaceous material is transformed into fuel gases in the presence of a gasifying agent.

The major drawback of gasification is the formation of tars, which are easily condensable organic compounds, which can cause operational problems in the equipment that will use the gas. One way to resolve the problem of the tars is by catalytic reforming with steam, whereby the tars are cracked and converted into lighter gases.

In the present invention said problem is addressed by focusing on applying the thermal cracking of the tars present in the gas stream from gasification.

The gases from gasification mainly contain CO, CO₂, H₂ and light hydrocarbons in different proportions depending on the origin of the raw material used and the operating conditions of the process. Along with the gas, other products are also generated: a solid carbon residue (char from gasification) and a mixture of steam and condensable organic compounds, called tars, which are carried by the gas and that, due to the ease at which they condense, pose a risk to the equipment in which the gas obtained is used.

The efficiency of the gasification process and the characteristics of the gas product depends mainly on the reaction conditions (temperature, pressure, pressure, gasifying agent and reaction time), the type of reactor used (updraft or downdraft fixed bed, fluidised bed, gas drag, etc.) and the cleaning system of the gas applied, either cold cleaning systems such as filters, scrubbers or hot cleaning by cracking tars, either thermal or catalytic.

Accordingly, the invention herein has developed an innovative process for cracking tars and steam reforming which is conducted in a specific reactor, which is also object of the invention herein. Therefore, the present invention also relates to equipment (reforming and thermal cracking reactor) in a particular configuration relative to a gasifier, in order to treat the gas stream with means that do not affect the normal operation of the gasifier.

Before going into the description of the invention in further detail, the inventors thereof have conducted a background study, finding documents of the state of the art which are outlined below.

In respect of the background of the state of the art, Patent ES2319026 relates to a process for using glycerine as biomass, for obtaining energy in a gasification process by means of spraying gas, based on the use of a mixture of oxygen, steam and atmospheric air as gasifying agents, which are introduced into a gasification chamber at temperatures above 900°C, so that the gas obtained passes into a reformer wherein, also at temperatures above 900°C, the set of reactions of partial oxidation/thermal cracking in the presence of metal oxides are completed and, subsequently, a hot cyclonic precipitation is performed to retain the ashes greater than 5 microns in size and the gas is cooled rapidly by means of a basket-type evaporator.

Another patented system is protected in patent EP0801670 which relates to a process and a steam cracking installation comprising the injection of erosive powders for scraping inlays, at least partially, of the quench exchangers, without interrupting the steam cracking cycle. The powders, preferably injected just before the quench exchangers, are separated from the cracked gas in primary gas/sold separators, provisionally stored in receiver drums at controlled temperature and evacuated to a common module for storage and/or treatment of these powders by pneumatic transfer via a relatively small flow of non-condensable gas. The process and the installation can be used to collect solid fragments generated by the injection of chemical compounds used as catalysts for the steam gasification of coke.

A third patent document in the state of the art is invention EP0328216 which relates to a process for the thermal cracking of residual hydrocarbon oils which comprises the following steps:
1) feeding the residual hydrocarbon oil and a synthesis gas into a thermal cracking zone, the synthesis gas having a sufficiently high temperature to maintain the temperature in the thermal cracking zone by means of direct heat exchange at a value in the range of 420°C to 850°C;
2) separating the cracked products from step 1 into (a) a gaseous fraction containing synthesis gas, (b) one or more hydrocarbon distillate fractions and (c) a cracked residue;
3) separating the cracked residue from step 2 into one or more heavy hydrocarbon oils, which are relatively poor in asphaltenes, and into one or more heavy hydrocarbon oils, which are relatively rich in asphaltenes;
4) gasifying one or more heavy hydrocarbon oils, which are relatively rich in asphaltenes, from step 3 in the presence of oxygen and steam with production of synthesis gas; and
5) applying synthesis gas from step 4 as synthesis gas in step 1.

Given the preceding information, it must be noted that the present invention has the overall advantage that the components originating from a gas stream outlet from a gasifier are subjected to consecutive stages of combustion of a fraction of the gas stream, thermal cracking and steam reforming, thereby managing to considerably reduce the unwanted products from said gas stream from a gasification process, such as tars, considerably increasing the thermal efficiency of the system in respect of the conversion of the fractions of organic solid fuels and condensable vapours (tars) to gas. WO 2012/162842 A1 describes a reactor and process for generating and cleaning syngas, including a valveless rotary distributor. Therefore, the present invention relates to a process that reduces the content of tars present in the gas stream from a gasifier, significantly simplifying the subsequent treatment of gas, in which operations are eliminated which result in a condensation of tars and contributes to a significant reduction in energy consumption for washing water treatment of said stream with presence of tars.

### BRIEF DESCRIPTION OF THE FIGURES

For a better understanding of the characteristics of the invention, the following figures are attached as an integral part of said description, in which, as non-limiting illustration of the invention, the following figure is shown:

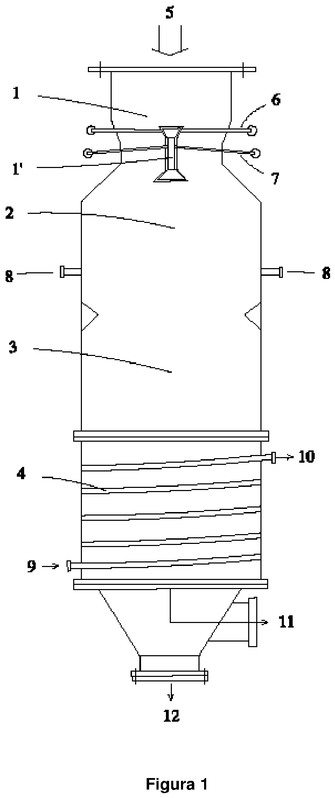

Figure 1 is a schematic view of the reactor according to the present invention wherein:
   (1) It schematically represents the distributor (1).
   (1') It schematically represents the device (1') located inside the distributor (1) which has a plurality of water inlets (6) and inlets for the oxidizing agent (7).
   (2) It schematically represents the thermal cracking chamber (2).
   (3) It schematically represents the reforming chamber (3).
   (4) It schematically represents the heat exchanger (4).
   (5) It schematically represents the inlet for the gas stream from a gasifier.
   (6) It schematically represents the water inlets of the device (1').
   (6') It schematically represents the steam outlet orifices of the device (1').
   (7) It schematically represents the inlets for the oxidizing agent of the device (1').
   (8) It schematically represents the water inlets of the reforming chamber (3).
   (9) It schematically represents the thermal oil inlet of the heat exchanger (4).
   (10) It schematically represents the thermal oil outlet of the heat exchanger (4).
   (11) It schematically represents the outlet for the product gas stream.
   (12) It schematically represents the outlet for solid residues and access for cleaning the reactor.
   (13) It schematically represents the annular section of the device (1').
   (14) It schematically represents the inner cavity of the device (1').
   (14a) It schematically represents the first part of the device (1').
   (14b) It schematically represents the oblong cylindrical chamber of the device (1').
   (14c) It schematically represents the frustoconical section of the device (1').

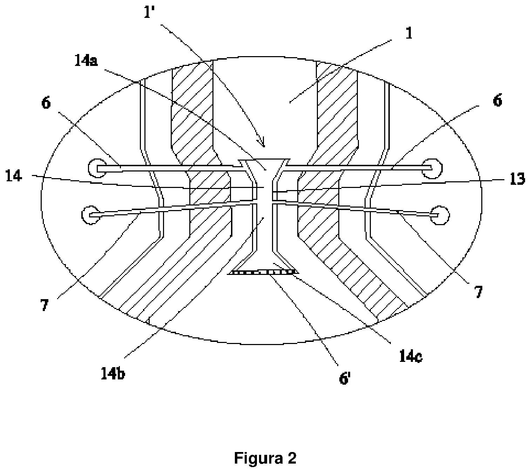

Figure 2 is a detailed sectional view of the device (1').

### DETAILED DESCRIPTION OF THE INVENTION

The present invention belongs to the field of treatment of a gas stream from gasification of organic solid materials and, particularly, to the process for conditioning the outlet gas stream from a gasifier, conducting reactions for thermal cracking of tars and the steam reforming of the remaining carbon for subsequent energy valuation of said gas. The invention also relates to a thermal cracking reactor and steam reforming by which the invention is applied.

The reactor of the invention herein, according to figure 1, has a single continuous body comprising a distributor (1), a thermal cracking chamber (2), a reforming chamber (3) and a heat exchanger (4).

For the purpose of the present invention a distributor (1) is defined as the initial section of the reactor, which receives the gas stream from a gasifier for conditioning thereof and which comprises a device (1') located inside said distributor (1), concentrically to the reactor and in an axial direction to the gas stream. This device (1') has an annular section (13) which operates as a continuous evaporation chamber.

For the purpose of the present invention, a continuous evaporation chamber is defined as the device or part of the device wherein a process in which the water enters one end of said device or part of the device and exits continuously as steam from the opposite side of said device or part of said device occurs. The amount of water entering the device or part of the device at the end where the inlet is located is equal to the amount of steam produced and which exits the device or the part of the device where the steam outlet is located at the opposite end. The continuous evaporation processes are also known as flashing.

Said device (1'), as shown in Figure 2, comprises a first part (14a) in an inverted frustoconical shape, which has a plurality of water inlet pipes (6) opening into an annular section (13), distributing the water along said annular section (13) until it exits, having been converted into steam, through a plurality of holes (6') located in the bottom of said device (1'). Said annular section (13) operates as a continuous evaporation chamber. The water inlets (6) further enable the attachment of said device (1') to the reactor body. The device (1') as an inner cavity (14) through which between 6-10% of the gas stream that enters the distributor (1) penetrates. The device (1') has a second part or oblong cylindrical chamber (14b) which has a plurality of inlets for the oxidizing agent (7), which penetrate the inner cavity (14) of the device (1') crossing the annual section (13) thereof, such that said inner cavity (14) of said device (1') is connected to the outside of the reactor, for the supply of the oxidizing agent. The inlets for the oxidizing agent (7) are located at an acute angle with the outer wall of the oblong cylindrical chamber (14b), and in an upward direction relative to the bottom of the device (1'), forming an angle of 5-10° to the transverse axis of said device (1'). Said inlets for the oxidizing agent (7) also act as a support for this device (1') providing great rigidity to the entire assembly. The device (1') terminates with a frustoconical section (14c) which has a plurality of holes (6') at the largest diameter oriented towards the inner cavity (14) of the device (1') and the steam formed in the annular section (13) of said device (1') exits through said orifices (6').

The device (1') has been specially designed to fulfil the following functions:
- performing continuous evaporation of the water entering the device (1'), specifically to the annular section (13).
- triggering a turbulent flow in the distributor (1) that improves the conditions for mixing the gas stream entering the reactor with the water and the oxidizing agent.
- introducing the oxidizing agent in the oblong cylindrical chamber (14b), for directly treating only a fraction of the total gas stream entering the reactor with the oxidizing agent.
- distributing said oxidizing agent in the form of a vortex and countercurrent to the flow of the gas stream, to achieve a mixing zone at a high temperature at the outlet of the frustoconical section (14c), through which the steam exits towards the inner cavity (14) of the reactor.

For the purpose of the present invention, a thermal cracking chamber (2) is defined as being the section adjacent to the distributor (1), wherein the reactions for thermal cracking of tars present in the gas stream from the gasifier are produced.

For the purpose of the present invention reforming chamber (3) is defined as the section adjacent to the thermal cracking chamber (2), wherein said reforming chamber (3) comprises a narrowing in its initial part. A plurality of water inlets (8) are located in said reforming chamber (3).

For the purpose of the present invention, heat exchanger (4) is defined as the section of the reactor wherein said closed-type heat exchanger (4) which extends longitudinally to the outlet of the product gas stream is externally located (11). The heat exchanger (4) is defined as the section adjacent to the reforming chamber (3) and a thermal oil recirculates in said heat exchanger (4) at an intake temperature of 250°C and an outlet temperature of 350°C. Said thermal oil enters the heat exchanger (4) through the inlet (9) and exits through the outlet (10).

The outlet for the product gas stream (11) is located after the heat exchanger section (4). Said outlet for the product gas stream (11) is located laterally to the reactor.

For the purpose of the present invention, the outlet for solid residues and access for cleaning the reactor (12) is defined as an inverted frustoconical section located at the end and bottom of the reactor. Mechanical means for the disposal of solid residues are coupled in said section.

In particular, the invention herein relates to a reactor in which a process is carried out for conditioning the outlet gas stream from a gasifier, conducting reactions for thermal cracking of tar and steam reforming of water from the remaining or unburned carbon (char).

The reactor according to the present invention operates by passing the outlet gas stream from a gasification process, which is between the 750º-800ºC, through the distributor (1) in which the device (1') is located, wherein the intake between 6-10% of the total gas stream entering the distributor (1) is produced. Said fraction of the gas stream circulates through the inner cavity (14) of the device (1'), mixing with the oxidizing agent that penetrates said inner cavity (14) in the oblong cylindrical chamber (14b). The oxidizing agent used in the invention herein may be selected from oxygen, air or a mixture thereof. Due to the location of the inlets for the oxidising agent (7) in the oblong cylindrical chamber (14b) a vortex is generated which promotes the mixing of said oxidizing agent with the fraction of the gas stream that circulates through the inner cavity (14) of the device (1') and the addition to said steam mixture that penetrates the holes (6'). There may be twelve inlets for the oxidizing agent (7) arranged at 30º to each other and there may be three water inlets (6) on the device (1'), arranged at 120° to each other.

The device (1') directly treats only a fraction (6-10%) of the total gas stream entering the reactor with the oxidizing agent, wherein said fraction of gas stream comes into contact with the oxidizing agent, with combustion reactions occurring that increase the temperature of said fraction of the gas stream to 1200°C at the outlet or end of the device (1'), thereby forming an oxidation zone.

On the other hand, the steam which is discharged into the inner cavity (14) in the end part of the frustoconical section (14c), dramatically inhibits the formation of soot (char), which is typically obtained by subjecting a hydrocarbon stream (tar) to a sudden increase in temperature. This is why the addition of water is of great importance, specifically steam, at the end of the frustoconical section (14c), as it is in this part where the oxidation zone is formed with a temperature of 1200ºC.

Therefore, the device (1') for preheating, mixing and reaction is designed to combust only a fraction of the gas stream, between 6-10% of the total gas stream coming from a gasifier, mixing said gas stream with the oxidizing agent and steam. In this manner, the gas stream that enters the distributor (1) from the reactor of the present invention is conditioned.

Due to the location of the device (1') a turbulent flow is created in the gas stream that promotes mixing, in the thermal cracking chamber (2), of the fraction of said gas stream that has been in contact with the oxidizing agent in the inner cavity (14) of the device (1') with the rest of the gas stream. In said thermal cracking chamber (2), the mixture comprising the gas stream along with the oxidizing agent and the steam reaches a temperature of 900°C, carrying out the reactions for the thermal cracking of tars present in said gas stream.

The gas stream continues and passes to a reforming chamber (3), a turbulent flow taking place in said gas stream due to the narrowing present in the initial part of said reforming chamber (3). This turbulent flow promotes the mixing of said gas stream with the water entering said reforming chamber (3) through the water inlets (8). There may be six water inlets (8) arranged at 60° to each other and at a 60° angle of inclination relative to the axial axis of the reactor. The steam reforming reactions of the gas stream are conducted in this reforming chamber (3) in a range of temperatures between 900ºC at the inlet 650°C at the outlet of this reforming chamber (3), all without steam condensation occurring inside said reforming chamber (3). In addition, the water that is added to the gas stream through the water inlets (8) regulates the temperature in this reforming chamber (3).

For a better understanding of the invention, both chambers (2) and (3) are connected to each other, as the reactor is a continuous single body.

Then, the gas stream passes through the section of the reactor where the heat exchanger (4) is externally located, wherein a thermal oil is used as a fluid, which enters the inlet (9) at a temperature of 250°C and exits the outlet (10) at approximately 350°C. The section of the reactor is the area for heat utilization, and the average temperature of the exchange surface in not less than 270°C in any case, to prevent condensation on the walls of this section of the reactor of the tars that may remain in the gas stream, a frequent occurrence in many known systems and which causes the system to shut down for short periods during operation. This is one of the reasons why the fluid used in the heat exchanger (4) is a thermal oil and not water, avoiding the decrease in temperature below 250ºC.

At the outlet of the product gas stream (11), said gas has a temperature between 340-400ºC.

The major advantage of the invention herein is that the content of tars decreases considerably in the product gas stream, greater than 90%, more specifically about 93% of the total content.

According to the process of the present invention, the gas stream undergoes a loss of calorific value, due to the combustion of a fraction of said gas stream, which is partially offset when, due to the steam reforming reactions, fuel gas species such as H₂ and CO are produced, said gaseous species providing significant energy content the product gas stream. In the process according to the present invention, the heat value loss is less than 5%.

Additionally, subsequent operations which the product gas stream is to be subjected to are made easier with the reactor and the process object of the present invention, as there will be no condensation of tars in the post-treatment means, for example, filter means, as the effluent obtained when washing said product gas stream will only contain inorganic compounds.

The reactor object of the present invention is located directly after the outlet of the gasifier on the same line as the gas stream. Preferably, it may be before or after the solids separation means which are used, commonly cyclones, varying based on the content in inerts (ash) of the carbonaceous solid which is used in the gasifier.

According to another characteristic, the reactor is provided with support means, arranged on the outer surface of the housing, adapted to bear the weight thereof, such that the reactor is suspended from said support means, enabling the expansion of the reactor vertically and/or lateral damping means that prevent horizontal displacement.

According to another characteristic, the reactor is provided with housings which are made of an outer steel plate, one or more layers of thermally insulating material and an inner layer of refractory material.

### DESCRIPTION OF A PREFERRED EMBODIMENT

The preferred embodiment that follows hereinbelow is provided for illustrative purposes, but not limitation, to provide a better understanding of the invention.

For the purpose of the present invention, an example was performed to assess the efficiency of the reactor process object of the present invention. The operation of the process of the present invention is thereby demonstrated as well as the reactor in which the process is conducted.

To better understand the present embodiment and to check the correct operation of the present invention, Table 1 contains the parameters that demonstrate the effectiveness of the reactor object of the present invention.

**Table 1**

| EFFECTIVENESS OF THE REFORMING AND THERMAL CRACKING REACTION | | | |
|---|---|---|---|
| PARAMETERS EVALUATED | OUTLET STREAM FROM GASIFIER (5) | OUTLET STREAM FROM THE CRACKING CHAMBER (2) | OUTLET STREAM FROM THE REFORMING CHAMBER (3) |
| | | | |

| Composition of the stream (%) | | | |
|---|---|---|---|
| Gas | 94.04% | 93.56% | 85.74% |
| Content in Water | 2.88% | 3.81% | 11.89% |
| Filtered Char | 2.71% | 2.61% | 2.35% |
| Condensed Tars | 0.37% | 0.02% | 0.02% |
| | | | |
| Concentration of Tars (mg/Nm³) | 4,604 | 302 | 298 |
| CRACKING EFFICIENCY | 93.5% | | |
| | | | |

| Energy Content (kJ/Nm³) | | | |
|---|---|---|---|
| LHV of the Gas | 5,645 | 5,337 | 5,396 |
| | | | |

| Composition of the Gas (%) | | | |
|---|---|---|---|
| H2 | 14.85 | 14.04 | 15.14 |
| CO | 15.60 | 14.75 | 16.28 |
| CH4 | 4.00 | 3.78 | 3.21 |
| CO2 | 16.00 | 17.51 | 17.26 |
| C2H4 | 1.00 | 0.95 | 0.87 |
| O2 | 0.64 | 0.87 | 0.77 |
| N2 | 47.91 | 48.11 | 46.47 |
| Total: | 100.00 | 100.00 | 100.00 |

From the results shown in the above table, the most important include the efficiency of the thermal cracking stage, exceeding 93%, thereby reducing the tar content. In respect of energy content, the reduction of calorific value of the gas was less than 5%, and an increase in the concentration of H₂ and CO in the product gas stream relative to the concentration of these gases in the initial gas stream is also shown.

An object of the present invention is a process for conditioning the gas stream, the thermal cracking of tars and the steam reforming of said gas stream, in a reactor which includes the following steps:
a) passing a gas stream from a gasifier through a distributor (1) wherein the outlet gas stream from the gasifier is conditioned,
b) passing the conditioned gas stream in the distributor (1) to the thermal cracking chamber (2) of the reactor where the thermal cracking reactions of the tars present in said gas stream take place,
c) passing the gas stream from the thermal cracking chamber (2) to the reforming chamber (3) to obtain a mixture of the gas stream with steam resulting in the reforming reactions of the tar and solid carbonaceous residue,
d) passing the gas stream from step c) through the section of the reactor wherein the heat exchanger (4) is externally located, wherein the fluid used in said heat exchanger (4) is a thermal oil to ensure a temperature of at least 270°C, and
e) extracting the product gas stream at a temperature between 340°C-400°C through the product gas stream outlet (11).

According to another aspect, the process of the present invention is characterised in that step a) for conditioning the gas stream is produced by passing a fraction of between 6-10% of the total gas stream entering the distributor (1) through a device (1') located inside said distributor (1) which has a plurality of water inlets (6) opening into an annular section (13), distributing the water along said annular section (13) until it exits, having been converted into steam, through a plurality of holes (6') located in the bottom of said device (1') and a plurality of inlets for the oxidizing agent (7), the oxidizing agent being selected from oxygen, air or a mixture thereof; producing a combustion reaction, thereby increasing the temperature and speed of the gas stream and causing turbulence which improves the conditions for mixing the gas stream with the oxidizing agent and steam.

According to another aspect, in the process of the present invention the inlets for the oxidizing agent (7) in the oblong cylindrical chamber (14b) of the device (1') generate a vortex which promotes the mixing of said oxidizing agent with the fraction of the gas stream that circulates through the inner cavity (14) of the device (1') and the addition to said mixture of steam that penetrates the holes (6') of said device (1').

According to an important aspect, flameless combustion of a fraction of the gas stream entering the distributor (1) at a temperature between 900°C and 1200°C is performed in step a).

According to another aspect, step b) of the aforementioned process is carried out at a temperature of approximately 900°C, performing the reactions for thermal cracking of tars present in the gas stream.

According to another aspect, step c) of the aforementioned process is carried out at a temperature of approximately 650°C, performing the steam reforming reactions of the carbon remaining in the gas stream, at a temperature range of between 900°C at the inlet and 650ºC at the outlet of this reforming chamber (3).

According to another aspect, step d) of the aforementioned process is carried out by passing the gas stream through the section of the reactor where the heat exchanger (4) is externally located, wherein the fluid that is used in said heat exchanger (4) is a thermal oil with an intake temperature in said heat exchanger (4) of 250ºC and an outlet temperature of 350ºC, thereby preventing condensation on the walls of the section, where said heat exchanger (4) is located, of the tars that may remain in the gas stream.

According to another important aspect, the process of the present invention that the yield of reduction in tar content present in the gas stream from a gasifier is greater than 90%, more specifically greater than 93%.

According to another aspect, the process of the invention herein comprises:
- an inlet (5) for feeding the gas stream from a previous gasification process,
- inlets (6) for the addition of water, arranged at 120º to each other, in the device (1'),
- inlets (7) for adding the oxidizing agent, arranged at 30° to each other, in the device (1'), wherein the oxidizing agent is selected from oxygen, air or a mixture thereof,
- steam outlet orifices (6') located at the largest diameter of the frustoconical section (14c) of the device (1'),
- inlets (8) arranged at 60º to each other for addition of water, in the reforming chamber (3),
- an inlet (9) for thermal oil
- an outlet (10) for thermal oil
- an outlet (11) located laterally to the reactor for the product gas stream, and
- an outlet (12) for solid residues and access to the reactor.

According to another important aspect, the present invention relates to a reactor for conditioning a gas stream from a gasifier, the thermal cracking of tars present in said gas stream and steam reforming of the remaining carbon in said gas stream. The reactor of the present invention sequentially comprises a distributor (1) for conditioning the gas stream from a gasification process, a thermal cracking chamber (2), a reforming chamber (3), a closed heat exchanger (4) and outlet means both the product gas stream and solid residues.

According to another important aspect of the present invention, the distributor (1) comprises a device (1') located inside said distributor (1), concentrically to the reactor and in an axial direction to the gas stream, wherein said device (1') has an annular section (13) which operates as a continuous evaporation chamber.

According to another important aspect of the present invention, the device (1') has an inner cavity (14) through which between 6-10% of the total gas stream that enters the distributor (1) penetrates, and comprises a first part (14a) in an inverted frustoconical shape, that has a plurality of water inlet pipes (6) opening into an annular section (13), distributing the water along said annular section (13) until it exits, converted into steam, through a plurality of holes (6') located in the bottom of said device (1'), in particular, at the end of the frustoconical section (14c), a second part or oblong cylindrical chamber (14b), which has a plurality of inlets for the oxidizing agent (7), which penetrate the inner cavity (14) of the device (1') passing through the annular section (13) thereof, such that said inner cavity (14) of said device (1') connects with the outside of the reactor, for the supply of the oxidizing agent and with a third part with a frustoconical section (14c), the larger diameter having a plurality of holes (6') oriented towards the inner cavity (14) of the device (1') and the outlet of steam formed in the annular section (13) of said device (1 ') is passed through said holes (6').

According to another important aspect of the invention herein, the inlets for the oxidizing agent (7) are located forming an acute angle with the outer wall of the oblong cylindrical chamber (14b), and in an upward direction relative to the bottom of the device (1'), forming an angle of 5º-10º to the transverse axis of said device (1'), in order to introduce the oxidizing agent as a vortex and in the opposite direction in the inner cavity (14) of the device (1').

According to another important aspect of the invention herein, there are twelve inlets for the oxidizing agent (7) arranged at 30° to each other and there are three water inlets (6), arranged at 120° to each other. The inlets for the oxidizing agent (7) on the device (1') are formed by refractory stainless steel tubes.

According to another important aspect of the invention herein, the reforming chamber (3) has six inlets for water (8) arranged at 60° to each other and at a 60º angle of inclination relative to the axial axis of the reactor.

According to another important aspect of the invention herein, the chambers (2) and (3) in the reactor of the present invention are connected to each other inside the continuous single body reactor.

According to another important aspect of the invention herein, the heat exchanger (4) in the reactor in the invention herein is located outwardly in the section adjacent to the reforming chamber (3) and a thermal oil is used in said heat exchanger (4) with an intake temperature in said heat exchanger (4) of 250ºC and an outlet temperature of 350ºC, preventing condensation on the walls of the section, where said heat exchanger (4) is located, of the tars that may remain in the gas stream.

According to another important aspect of the present invention, the water inlets (6) and inlets for the oxidizing agent (7) serve as a support for the device (1') providing great rigidity to the entire assembly.

According to another aspect, the reactor of the invention herein comprises:
- an inlet (5) for the gas stream from a gasifier,
- a device (1') located inside the distributor (1),
- three inlets (6) for adding water, arranged at 120º to each other,
- twelve inlets (7) for the oxidizing agent,
- a plurality of steam outlet orifices (6') located at the largest diameter of the frustoconical section (14c) of the device (1'),
- six inlets (8) arranged at 60º to each other for intake of water, in the reforming chamber (3),
- an inlet (9) for thermal oil
- an outlet (10) for thermal oil
- an outlet (11) located laterally to the reactor for the product gas stream, and
- an outlet (12) for solid residues.

According to another important aspect of the present invention, the height of the oblong cylindrical chamber (14b) of the device (1') has a ratio equivalent to half the diameter of the distributor (1), H = ½ D, to ensure the appropriate mix time between the oxidizing agent and the fraction of the gas stream flowing through the inner cavity (14) of the device (1').

According to a final aspect, the reactor of the invention herein is provided with support means, arranged on the outer surface of the housing of the reactor, adapted to bear the weight thereof, enabling the expansion of the reactor vertically and lateral damping means that prevent horizontal displacement.

## Claims

1. Reactor for conditioning a gas stream from a gasifier, the thermal cracking of tars present in said gas stream and the steam reforming of water from the carbon remaining in said gas stream, which sequentially comprises a distributor (1) for conditioning the gas stream from a gasification process, a thermal cracking chamber (2), a reforming chamber (3), a closed heat exchanger (4) and outlet means for both the product gas stream and the solid residues **characterised in that** comprises a device (1') located inside said distributor (1), concentrically to the reactor and in an axial direction to the gas stream, said device (1') having an inner cavity (14) through which between 6-10% of the total gas stream entering the distributor (1) penetrates, and comprising a first part (14a) in an inverted frustoconical shape, which has a plurality of water inlet pipes (6) opening into an annular section (13), distributing the water along said annular section (13) until it exits, converted into steam, through a plurality of holes (6') located in the bottom of said device (1') which operates as a continuous evaporation chamber, in particular, at the end of a frustoconical section (14c), a second part or oblong cylindrical chamber (14b), which has a plurality of inlets for the oxidizing agent (7), which penetrate the inner cavity (14) of the device (1') passing through the annular section (13) thereof, such that said inner cavity (14) of said device (1') connects with the outside of the reactor, for the supply of the oxidizing agent and with a third part with said frustoconical section (14c) the larger diameter having a plurality of holes (6') oriented towards the inner cavity (14) of the device (1') and the outlet of steam formed in the annular section (13) of said device (1') is passed through said holes (6').

2. Reactor according to claim 1, **characterised in that** it comprises:
- an inlet (5) for the gas stream from a gasifier,
- three inlets (6) for adding water, arranged at 120º to each other,
- twelve inlets (7) for the oxidizing agent,
- a plurality of steam outlet orifices (6') located at the largest diameter of the frustoconical section (14c) of the device (1'),
- six inlets (8) arranged at 60º to each other for intake of water, in the reforming chamber (3),
- an inlet (9) for thermal oil
- an outlet (10) for thermal oil
- an outlet (11) located laterally to the reactor for the product gas stream, and
- an outlet (12) for solid residues.

3. Reactor according to claim 1, **characterised in that** the inlets for the oxidizing agent (7) are located forming an acute angle with the outer wall of the oblong cylindrical chamber (14b), and in an upward direction relative to the bottom of the device (1'), forming an angle of 5º-10º with the transverse axis of said device (1'), in order to introduce the oxidizing agent as a vortex and in the opposite direction in the inner cavity (14) of the device (1').

4. Reactor according to claim 1, **characterised in that** there are twelve inlets for the oxidizing agent (7) arranged at 30° to each other and there are three water inlets (6), arranged at 120° to each other.

5. Reactor according to claim 1, **characterised in that** the height of the oblong cylindrical chamber (14b) of the device (1') has a ratio equivalent to half the diameter of the distributor (1), H = ½D.

6. Reactor according to claim 4, **characterised in that** the inlets for the oxidizing agent (7) in the device (1') are made of refractory stainless steel tubes.

7. Reactor according to claim 1, **characterised in that** the heat exchanger (4) is located outwardly in the section adjacent to the reforming chamber (3) and a thermal oil is used in said heat exchanger (4) with an intake temperature in said heat exchanger (4) of 250ºC and an outlet temperature of 350ºC, preventing condensation on the walls of the section, where said heat exchanger (4) is located, of the tars that may remain in the gas stream.

8. Reactor according to claim 1, **characterised in that** it is provided with support means, arranged on the outer surface of the housing of the reactor, adapted to bear the weight thereof, enabling the expansion of the reactor vertically and lateral damping means that prevent horizontal displacement.

9. Process for conditioning a gas stream from a gasifier, the thermal cracking of tars present in said gas stream and the steam reforming of the remaining carbon in said gas stream using the reactor according claims 1 to 8, **characterised in that** it comprises the following steps:
a) passing the gas stream from a gasifier through a distributor (1) provided with a device (1') as defined in claim 1, wherein the outlet gas stream from the gasifier is conditioned,
b) passing the conditioned gas stream in the distributor (1) to the thermal cracking chamber (2) of the reactor where the thermal cracking reactions of the tars present in said gas stream take place,
c) passing the gas stream from the thermal cracking chamber (2) to the reforming chamber (3) to obtain a mixture of the gas stream with steam resulting in the reforming reactions of the tar and solid carbonaceous residue,
d) passing the gas stream from step c) through the section of the reactor wherein the heat exchanger (4) is externally located, wherein the fluid used in said heat exchanger (4) is a thermal oil to ensure a temperature of at least 270°C, and
e) extracting the product gas stream at a temperature between 340°C-400°C through the product gas stream outlet (11).

10. Process according to claim 9, **characterised in that** step a) for conditioning the gas stream is obtained by passing a fraction of between 6-10% of the total gas stream entering the distributor (1) through a device (1') located inside said distributor (1) which has a plurality of water inlets (6) opening into an annular section (13), distributing the water along said annular section (13) until it exits having been converted into steam by a plurality of holes (6') located in the bottom of said device (1') and a plurality of inlets for the oxidizing agent (7), the oxidizing agent being selected from oxygen, air or a mixture thereof; producing a combustion reaction, thereby increasing the temperature and speed of the gas stream and causing turbulence which improves the conditions for mixing the gas stream with the oxidizing agent and steam.

11. Process according to any of the preceding claims 9-10, **characterised in that** flameless combustion of a fraction of the gas stream entering the distributor (1) at a temperature between 900°C and 1200°C is performed in step a).

12. Process according to claim 9, **characterised in that** step b) is carried out at a temperature of approximately 900°C, the reactions for thermal cracking of tars being conducted.

13. Process according to claim 9, **characterised in that** step c) is carried out at a temperature of approximately 650°C, performing the steam reforming reactions from the carbon remaining in the gas stream.

14. Process according to any of the claims 9, 12 and 13, **characterised in that** both chambers (2) and (3) are connected to each other inside the reactor of a continuous single body.

15. Process according to claim 9, **characterised in that** step d) is carried out by passing the gas stream through the section of the reactor where the heat exchanger (4) is externally located, wherein the fluid that is used in said heat exchanger (4) is a thermal oil with an intake temperature in said heat exchanger (4) of 250ºC and an outlet temperature of 350ºC, thereby preventing condensation on the walls of the section, where said heat exchanger (4) is located, of the tars that may remain in the gas stream.

16. Process according to any of the preceding claims 9-15, **characterised in that** the yield of reduction in tar content present in the gas stream from a gasifier is greater than 90%.

17. Process according to claim 10 wherein the oxidizing agent is selected from oxygen, air or a mixture thereof

## Patentansprüche

1. Reaktor zum Behandeln eines Gasstroms aus einem Vergaser, thermisches Cracken von in dem Gasstrom vorliegenden Teeren und Dampfreformierung von Wasser aus dem in dem Gasstrom verbleibenden Kohlenstoff, welcher nacheinander einen Verteiler (1) zum Behandeln des Gasstroms aus einem Vergasungsverfahren, eine thermische Crackkammer (2), eine Reformierungskammer (3), einen geschlossenen Wärmetauscher (4) und Auslassmittel sowohl für den Produktgasstrom als auch für feste Rückstände umfasst, **dadurch gekennzeichnet, dass** dieser eine Vorrichtung (1') umfasst, welche innerhalb des Verteilers (1), konzentrisch zu dem Reaktor und in einer axialen Richtung zu dem Gasstrom, angeordnet ist, wobei die Vorrichtung (1') einen inneren Hohlraum (14) aufweist, durch welchen 6 bis 10 % des Gesamtgasstroms, der in den Verteiler (1) eintritt, eindringt, und einen ersten Teil (14a) in einer umgekehrten Kegelstumpfform umfasst, welcher mehrere Wassereinlassleitungen (6) aufweist, die sich in einen ringförmigen Abschnitt (13) öffnen, wobei sie das Wasser entlang des ringförmigen Abschnitts (13) verteilen, bis es, in Dampf umgewandelt, durch mehrere Löcher (6'), die in dem Boden der Vorrichtung (1') angeordnet sind, welche als eine kontinuierliche Verdampfungskammer funktioniert, insbesondere an dem Ende eines kegelstumpfförmigen Abschnitts (14c), ausläuft, und einen zweiten Teil bzw. eine längliche zylindrische Kammer (14b) umfasst, welche mehrere Einlässe für das Oxidationsmittel (7) aufweist, welche innerhalb des inneren Hohlraums (14) der Vorrichtung (1') bei Durchlaufen des ringförmigen Abschnitts (13) davon eindringen, sodass der innere Hohlraum (14) der Vorrichtung (1') mit der Außenseite des Reaktors zum Zuführen des Oxidationsmittels und mit einem dritten Teil mit dem kegelstumpfförmigen Abschnitt (14c) verbunden ist, wobei der größere Durchmesser mehrere Löcher (6') aufweist, die zu dem inneren Hohlraum (14) der Vorrichtung (1') ausgerichtet sind, und wobei der in dem ringförmigen Abschnitt (13) der Vorrichtung (1') gebildete Dampfauslass durch die Löcher (6') geführt wird.

2. Reaktor nach Anspruch 1, **dadurch gekennzeichnet, dass** er Folgendes umfasst:
- einen Einlass (5) für den Gasstrom aus einem Vergaser,
- drei Einlässe (6) zum Zugeben von Wasser, welche in 120° zueinander angeordnet sind,
- zwölf Einlässe (7) für das Oxidationsmittel,
- mehrere Dampfauslassöffnungen (6'), welche an dem größten Durchmesser des kegelstumpfförmigen Abschnitts (14c) der Vorrichtung (1') angeordnet sind,
- sechs Einlässe (8), welche in 60° zueinander zum Einnehmen von Wasser in der Reformierungskammer (3) angeordnet sind,
- einen Einlass (9) für Thermoöl
- einen Auslass (10) für Thermoöl
- einen Auslass (11), welcher seitlich des Reaktors für den Produktgasstrom angeordnet ist, und
- einen Auslass (12) für feste Rückstände.

3. Reaktor nach Anspruch 1, **dadurch gekennzeichnet, dass** die Einlässe für das Oxidationsmittel (7) derart angeordnet sind, dass sie einen spitzen Winkel mit der Außenwand der länglichen zylindrischen Kammer (14b) bilden, und in einer Aufwärtsrichtung bezüglich des Bodens der Vorrichtung (1') einen Winkel von 5º bis 10º mit der Querachse der Vorrichtung (1') bilden, um das Oxidationsmittel als einen Wirbel und in der entgegengesetzten Richtung in dem inneren Hohlraum (14) der Vorrichtung (1') einzubringen.

4. Reaktor nach Anspruch 1, **dadurch gekennzeichnet, dass** es zwölf Einlässe für das Oxidationsmittel (7) gibt, welche in 30° zueinander angeordnet sind, und dass es drei Wassereinlässe (6) gibt, welche in 120° zueinander angeordnet sind.

5. Reaktor nach Anspruch 1, **dadurch gekennzeichnet, dass** die Höhe der länglichen zylindrischen Kammer (14b) der Vorrichtung (1') ein Verhältnis aufweist, welches der Hälfte des Durchmessers des Verteilers (1), H = ½D, entspricht.

6. Reaktor nach Anspruch 4, **dadurch gekennzeichnet, dass** die Einlässe für das Oxidationsmittel (7) in der Vorrichtung (1') aus feuerfesten Edelstahlrohren bestehen.

7. Reaktor nach Anspruch 1, **dadurch gekennzeichnet, dass** der Wärmetauscher (4) äußerlich in dem Abschnitt, welcher benachbart zu der Reformierungskammer (3) ist, angeordnet ist, und dass ein Thermoöl in dem Wärmetauscher (4) mit einer Einnahmetemperatur von 250 ºC in dem Wärmetauscher (4) und einer Auslasstemperatur von 350 ºC verwendet wird, wobei die Kondensation der möglicherweise in dem Gasstrom verbleibenden Teere an den Wänden des Abschnitts, an welchem der Wärmetauscher (4) angeordnet ist, verhindert wird.

8. Reaktor nach Anspruch 1, **dadurch gekennzeichnet, dass** er mit Stützmitteln, welche an der Außenfläche des Gehäuses des Reaktors angeordnet sind, wobei sie zum Tragen des Gewichts davon angepasst sind, und mit seitlichen Dämpfungsmitteln, welche die horizontale Verschiebung verhindern, bereitgestellt ist.

9. Verfahren zum Behandeln eines Gasstroms aus einem Vergaser, thermisches Cracken von in dem Gasstrom vorliegenden Teeren und Dampfreformierung des in dem Gasstrom verbleibenden Kohlenstoffs unter Verwendung des Reaktors nach Anspruch 1 bis 8, **dadurch gekennzeichnet, dass** es die folgenden Schritte umfasst:
a) Führen des Gasstroms aus einem Vergaser durch einen Verteiler (1), welcher mit einer Vorrichtung (1') nach Anspruch 1 bereitgestellt ist, wobei der Auslassgasstrom aus dem Vergaser behandelt ist,
b) Führen des behandelten Gasstroms in dem Verteiler (1) zu der thermischen Crackkammer (2) des Reaktors, in welchem die Reaktionen des thermischen Crackens der in dem Gasstrom vorliegenden Teere stattfinden,
c) Führen des Gasstroms von der thermischen Crackkammer (2) zu der Reformierungskammer (3), um ein Gemisch des Gasstroms mit dem Dampf zu erhalten, wodurch die Reformierungsreaktionen der Teere und des festen kohlenstoffhaltigen Rückstands entstehen,
d) Führen des Gasstroms von Schritt c) durch den Abschnitt des Reaktors, an welchem der Wärmetauscher (4) äußerlich angeordnet ist, wobei das in dem Wärmetauscher (4) verwendete Fluid ein Thermoöl ist, um eine Temperatur von mindestens 270 °C zu sichern, und
e) Extrahieren des Produktgasstroms bei einer Temperatur von zwischen 340 °C und 400 °C durch den Produktgasstromauslass (11).

10. Verfahren nach Anspruch 9, **dadurch gekennzeichnet, dass** Schritt a) zum Behandeln des Gasstroms durch das Führen einer Fraktion von zwischen 6 und 10 % des gesamten Gasstroms, welcher in den Verteiler (1) eintritt, durch eine innerhalb des Verteilers (1) angeordnete Vorrichtung (1'), welche mehrere Wassereinlässe (6), die sich in einen ringförmigen Abschnitt (13) öffnen, wobei sie das Wasser entlang des ringförmigen Abschnitt (13) verteilen, bis es, nachdem es in Dampf umgewandelt wurde, durch mehrere Löcher (6') ausläuft, die in dem Boden der Vorrichtung (1') angeordnet sind, und mehrere Einlässe für das Oxidationsmittel (7) aufweist, wobei das Oxidationsmittel aus Sauerstoff, Luft oder einem Gemisch davon ausgewählt ist; das Herstellen einer Verbrennungsreaktion, wodurch die Temperatur und die Geschwindigkeit des Gasstroms erhöht wird, und das Verursachen einer Verwirbelung, was die Bedingungen für das Mischen des Gasstroms mit dem Oxidationsmittel und dem Dampf verbessert, erhalten wird.

11. Verfahren nach einem der vorhergehenden Ansprüche 9 bis 10, **dadurch gekennzeichnet, dass** eine flammenlose Verbrennung einer Fraktion des Gasstroms, welcher in den Verteiler (1) eintritt, bei einer Temperatur von zwischen 900 °C und 1 200 °C in Schritt a) durchgeführt wird.

12. Verfahren nach Anspruch 9, **dadurch gekennzeichnet, dass** Schritt b) bei einer Temperatur von etwa 900 °C ausgeführt wird, wobei die Reaktionen für das thermische Cracken von Teeren durchgeführt werden.

13. Verfahren nach Anspruch 9, **dadurch gekennzeichnet, dass** Schritt c) bei einer Temperatur von etwa 650 °C ausgeführt wird, wobei die Reaktionen der Dampfreformierung aus dem in dem Gasstrom verbleibenden Kohlenstoff durchgeführt werden.

14. Verfahren nach einem der Ansprüche 9, 12 und 13, **dadurch gekennzeichnet, dass** beide Kammern (2) und (3) innerhalb des Reaktors aus einem einzigen durchgehenden Körper miteinander verbunden sind.

15. Verfahren nach Anspruch 9, **dadurch gekennzeichnet, dass** Schritt d) durch das Führen des Gasstroms durch den Abschnitt des Reaktors, an welchem der Wärmetauscher (4) äußerlich angeordnet ist, ausgeführt wird, wobei das in dem Wärmetauscher (4) verwendete Fluid ein Thermoöl mit einer Einnahmetemperatur von 250 ºC in dem Wärmetauscher (4) und einer Auslasstemperatur von 350 ºC ist, wodurch die Kondensation der möglicherweise in dem Gasstrom verbleibenden Teere an den Wänden des Abschnitts, an welchem der Wärmetauscher (4) angeordnet ist, verhindert wird.

16. Verfahren nach einem der vorhergehenden Ansprüche 9 bis 15, **dadurch gekennzeichnet, dass** die Ausbeute der Reduktion des in dem Gasstrom aus einem Vergaser vorliegenden Teergehalts höher als 90 % ist.

17. Verfahren nach Anspruch 10, wobei das Oxidationsmittel aus Sauerstoff, Luft oder einem Gemisch davon ausgewählt ist.

## Revendications

1. Réacteur destiné à conditionner un flux gazeux provenant d'un gazéifieur, le craquage thermique des goudrons présents dans ledit flux gazeux et le reformage de la vapeur d'eau du carbone restant dans ledit flux gazeux, qui comprend séquentiellement un distributeur (1) pour conditionner le flux gazeux d'un procédé de gazéification, une chambre de craquage thermique (2), une chambre de reformage (3), un échangeur thermique fermé (4) et un moyen de sortie pour le flux gazeux produit et les résidus solides, **caractérisé en ce qu'**il comprend un dispositif (1') situé á l'intérieur du dit distributeur (1), concentriquement au réacteur et dans une direction axiale vers le flux gazeux, ledit dispositif (1') ayant une cavité interne (14) à travers laquelle entre 6-10 % du flux total de gaz entrant dans le distributeur (1) pénètre et comprend une première partie (14a) ayant une forme tronconique inversée, qui comporte une pluralité de tuyaux d'entrée d'eau (6) débouchant dans une section annulaire (13), distribuant l'eau le long de ladite section annulaire (13) jusqu'à sa sortie, convertie en vapeur, à travers une pluralité d'orifices (6') situés dans le fond dudit dispositif (1') qui fonctionne comme une chambre d'évaporation continue, notamment, à l'extrémité d'une section tronconique (14c), une seconde partie ou chambre cylindrique oblongue (14b), qui présente une pluralité d'entrées pour l'agent oxydant (7), qui pénètre dans la cavité interne (14) du dispositif (1') traversant sa section annulaire (13), de sorte que ladite cavité interne (14) dudit dispositif (1') se raccorde à l'extérieur du réacteur, pour l'alimentation de l'agent oxydant et avec une troisième partie avec ladite section tronconique (14c), le plus grand diamètre ayant une pluralité d'orifices (6') orientés vers la cavité interne (14) du dispositif (1') et la sortie de vapeur formée dans la section annulaire (13) dudit dispositif (1') passant à travers lesdits orifices (6').

2. Réacteur selon la revendication 1, **caractérisé en ce qu'**il comprend :
- une entrée (5) pour le flux gazeux provenant d'un gazéificateur,
- trois entrées (6) pour ajouter de l'eau, disposées à 120º l'une de l'autre,
- douze entrées (7) pour l'agent oxydant,
- une pluralité d'orifices de sortie de la vapeur (6') situés au plus grand diamètre de la section tronconique (14c) du dispositif (1'),
- six entrées (8) disposées à 60° l'une de l'autre pour l'admission d'eau, dans la chambre de reformage (3),
- une entrée (9) pour de l'huile thermique,
- une sortie (10) pour de l'huile thermique,
- une sortie (11) située latéralement au réacteur pour le flux gazeux produit, et
- une sortie (12) pour les résidus solides.

3. Réacteur selon la revendication 1, **caractérisé en ce que** les entrées pour l'agent oxydant (7) forment un angle aigu avec la paroi externe de la chambre cylindrique oblongue (14b) et vers le haut par rapport au fond du dispositif (1'), formant un angle de 5º-10º avec l'axe transversal dudit dispositif (1'), afin d'introduire l'agent oxydant en tant que vortex et en sens inverse dans la cavité interne (14) du dispositif (1').

4. Réacteur selon la revendication 1, **caractérisé en ce qu'**il présente douze entrées pour l'agent oxydant (7) disposées à 30º l'une de l'autre et de trois entrées d'eau (6) disposées à 120° l'une de l'autre.

5. Réacteur selon la revendication 1, **caractérisé en ce que** la hauteur de la chambre cylindrique oblongue (14b) du dispositif (1') a un rapport équivalent à la moitié du diamètre du distributeur (1), H = ½D.

6. Réacteur selon la revendication 4, **caractérisé en ce que** les entrées pour l'agent oxydant (7) dans le dispositif (1') sont constituées de tubes en acier inoxydable réfractaire.

7. Réacteur selon la revendication 1, **caractérisé en ce que** l'échangeur thermique (4) est situé dans la section adjacente à la chambre de reformage (3) et une huile thermique est utilisée dans ledit échangeur thermique (4) avec une température d'admission dans ledit échangeur (4) de 250 ºC et une température de sortie de 350 ºC, empêchant la condensation sur les parois de la section, où se trouve ledit échangeur thermique (4), des goudrons pouvant rester dans le flux gazeux.

8. Réacteur selon la revendication 1, **caractérisé en ce qu'**il est muni de moyens de support, disposés sur la surface extérieure du logement du réacteur, adaptés pour supporter le poids de ceux-ci, permettant la dilatation du réacteur verticalement et latéralement avec des moyens d'amortissement empêchant le déplacement horizontal.

9. Procédé de conditionnement d'un flux gazeux d'un gazéifieur, le craquage thermique des goudrons présents dans ledit flux gazeux et le reformage à la vapeur du carbone restant dans ledit flux gazeux en utilisant le réacteur, selon les revendications 1 à 8, **caractérisé en ce qu'**il comprend les étapes suivantes :
a) le passage du flux gazeux d'un gazéifieur à travers un distributeur (1) muni d'un dispositif (1'), tel que défini dans la revendication 1, dans lequel le flux gazeux de sortie provenant du gazéificateur est conditionné,
b) le passage du flux gazeux conditionné dans le distributeur (1) vers la chambre de craquage thermique (2) du réacteur où se déroulent les réactions de craquage thermique des goudrons présents dans ledit flux gazeux,
c) le passage du flux gazeux de la chambre de craquage thermique (2) vers la chambre de reformage (3) pour obtenir un mélange du flux gazeux avec de la vapeur résultant des réactions de reformage du goudron et du résidu carboné solide,
d) le passage du flux gazeux de l'étape c) à travers la section du réacteur dans laquelle est situé l'échangeur thermique (4), dans lequel le fluide utilisé dans ledit échangeur thermique (4) est une huile thermique assurant une température d'au moins 270° C, et
e) l'extraction du flux produit à une température comprise entre 340 °C et 400 °C, à travers la sortie de flux gazeux produit (11).

10. Procédé selon la revendication 9, **caractérisé en ce que** l'étape a) de conditionnement du flux gazeux est obtenue en faisant passer une fraction comprise entre 6-10 % du flux gazeux total entrant dans le distributeur (1) à travers un dispositif (1') situé à l'intérieur du distributeur (1) qui présente une pluralité d'entrées d'eau (6) débouchant dans une section annulaire (13), distribuant l'eau le long de ladite section annulaire (13) jusqu'à ce qu'elle ait été transformée en vapeur par une pluralité d'orifices (6') située au fond dudit dispositif (1') et d'une pluralité d'entrées pour l'agent oxydant (7), l'agent oxydant étant choisi parmi de l'oxygène, de l'air ou un mélange de ces derniers ; produisant une réaction de combustion, augmentant ainsi la température et la vitesse du flux gazeux et provoquant une turbulence qui améliore les conditions de mélange du flux gazeux avec l'agent oxydant et la vapeur.

11. Procédé selon l'une quelconque des revendications précédentes 9-10, **caractérisé en ce que** la combustion sans flamme d'une fraction du flux gazeux entrant dans le distributeur (1) à une température comprise entre 900 °C et 1200 °C est réalisée à l'étape a).

12. Procédé selon la revendication 9, **caractérisé en ce que** l'étape b) est réalisée à une température d'environ 900 °C, les réactions de craquage thermique des goudrons étant réalisées.

13. Procédé selon la revendication 9, **caractérisé en ce que** l'étape c) est réalisée à une température d'environ 650 °C, réalisant les réactions de reformage de la vapeur à partir du carbone restant dans le flux gazeux.

14. Procédé selon l'une quelconque des revendications 9, 12 et 13, **caractérisé en ce que** les deux chambres (2) et (3) sont reliées l'une à l'autre à l'intérieur du réacteur d'un corps unique continu.

15. Procédé selon la revendication 9, **caractérisé en ce que** l'étape d) est réalisée par le passage du flux gazeux à travers la section du réacteur où l'échangeur thermique (4) est situé à l'extérieur, dans lequel le liquide qui est utilisé dans ledit échangeur thermique (4) est une huile thermique avec une température d'admission dans ledit échangeur (4) de 250 ºC et une température de sortie de 350 ºC, empêchant la condensation sur les parois de la section, où se trouve ledit échangeur thermique (4), des goudrons pouvant rester dans le flux gazeux.

16. Procédé selon l'une quelconque des revendications précédentes 9 à 15, **caractérisé en ce que** le rendement de réduction de la teneur en goudron présente dans le flux gazeux d'un gazéificateur est supérieur à 90 %.

17. Procédé selon la revendication 10, dans lequel l'agent oxydant est choisi parmi de l'oxygène, de l'air ou un mélange de ces derniers.
